# EUROPÄISCHE PATENTSCHRIFT

(11) **EP 3 597 045 B1**
(45) Veröffentlichungstag und Bekanntmachung des Hinweises auf die Patenterteilung: **17.02.2021**
(21) Anmeldenummer: 18196627.6
(22) Anmeldetag: 25.09.2018
(51) Int. Cl.: B01D 61/02, B01D 61/58, A23C 9/144, A23J 1/20, A23J 3/08, A23C 21/00, B01D 61/42

(54) **VERFAHREN ZUR HERSTELLUNG VON SÜSSMOLKE**
PROCESS FOR THE PRODUCTION OF SWEET WHEY
PROCÉDÉ POUR LA PREPARATION DE PETIT-LAIT DOUX

(30) Priorität: 19.07.2018 EP 18184438
(43) Veröffentlichungstag der Anmeldung: 22.01.2020
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 0 109 868
- GB-A- 1 405 484
- SU-A1- 626 751
- US-A- 2 758 965
- US-A- 4 227 981
- MERKEL ARTHUR ET AL: "Bipolar membrane electrodialysis assisted pH correction of milk whey", JOURNAL OF MEMBRANE SCIENCE, ELSEVIER BV, NL, Bd. 555, 16. März 2018 (2018-03-16), Seiten 185-196, XP085382547, ISSN: 0376-7388, DOI: 10.1016/J.MEMSCI.2018.03.035
- BALSTER ET AL: "Electrochemical acidification of milk by whey desalination", JOURNAL OF MEMBRANE SCIENCE, ELSEVIER BV, NL, Bd. 303, Nr. 1-2, 4. September 2007 (2007-09-04), Seiten 213-220, XP022229352, ISSN: 0376-7388
- GEORGE Q. CHEN ET AL: "Removal of lactic acid from acid whey using electrodialysis", SEPARATION AND PURIFICATION TECHNOLOGY, Bd. 158, 1. Januar 2016 (2016-01-01), Seiten 230-237, XP055556714, NL ISSN: 1383-5866, DOI: 10.1016/j.seppur.2015.12.016

## Beschreibung

### GEBIET DER ERFINDUNG

Die Erfindung befindet sich auf dem Gebiet der Milchindustrie und betrifft ein Verfahren zur gekoppelten Herstellung von Süßmolke und Milchsäure.

### HINTERGRUND DER ERFINDUNG

Molke ist die wässrige grünlich-gelbe Restflüssigkeit, die bei der Käseherstellung entsteht. Sie ist der flüssige Teil, der nach der Gerinnung der Milch zu Käse oder Quark abgesondert werden kann. Es gibt zwei Sorten von Molke: die *Süßmolke* (auch *Labmolke*)*,* die entsteht, wenn man Milch mit Lab zur Käseherstellung dicklegt, und die *Sauermolke,* die entsteht, wenn Milch durch Milchsäurebakterien gesäuert wird.

Molke besteht zu 94 % aus Wasser, zu 4 bis 5 % aus Milchzucker und ist nahezu fettfrei. Außerdem enthält sie Milchsäure, die Vitamine B₁, B₂ (dies bewirkt die grünliche Farbe) und B₆ sowie Kalium, Calcium, Phosphor und andere Mineralstoffe, doch vor allem 0,6 bis 1 % Molkenprotein. Molke enthält deutlich weniger Eiweiß als Milch. Insbesondere enthält sie anders als Milch kein Kasein. In Milch ist das Kasein hingegen das Haupteiweiß. Süßmolke hat einen pH-Wert von 5,6 oder mehr, Sauermolke 5,1 oder weniger.

Während Molke und speziell Süßmolke wertvolle Milchprodukte darstellen, für die es vielfältige Anwendungen gibt, stellt Sauermolke wegen des hohen Milchsäure- und Mineralienanteils ein Abfallprodukt dar, das allenfalls noch für den Tierfutterbereich geeignet ist.

Es hat verschiedene Ansätze gegeben, Sauermolke zu entsäuern, jedoch haben sich entsprechende Trennverfahren bislang als entweder zu aufwendig oder zu unvollständig erwiesen.

### RELEVANTER STAND DER TECHNIK

Gegenstand der EP 0712381 B1 (FRAUNHOFER) ist ein Verfahren zum Reinigen von Molkereiabwasser durch anaerobe Stoffumwandlung und Abtrennung der entstehenden Reaktionsprodukte, umfassend die folgenden Schritte: (a) Vorbehandeln des Abwassers mit Base, (b) Einführen des vorbehandelten Abwassers in einen Fermenter, anaerobes Fermentieren der im Abwasser vorhandenen Lactose zu Milchsäure und Nachreinigen der im Fermenter gebildeten Fermentationsbrühe; (c) Abkonzentrieren des Lactats im Abwasser und Aufkonzentrieren von Milchsäure und Base mit Hilfe bipolarer Elektrodialyse Die Schrift hat keinen Bezug zu Molke.

In der EP 1320410 B1 (ELECTROSYNTHESIS) wird ein Bipolarmembran-Elektrodialyse-Verfahren zur Salzspaltung mehrwertiger Metallsalze vorgeschlagen, bei dem das Metallkation in Gegenwart von Hydroxylionen im Wesentlichen unlösliche Niederschläge bildet. Die Einführung einer Säure in die Kammer, in der sich Metallhydroxide bilden würden, hemmt ihre Entwicklung oder neutralisiert gebildete Feststoffe, so dass die Salzspaltung fortgesetzt werden kann. Das Verfahren wird zur Herstellung konzentrierter und gereinigter Säuren, wie 2-Keto-L-Gluconsäure, H (KLG), ein Schlüsselzwischenprodukt bei der Herstellung von Ascorbinsäure, angewendet.

Aus der EP 2598468 B1 (PFEIFER UND LANGEN) ist ein Verfahren zur Rückgewinnung eines in einem Fermentationsprozess zur Herstellung eines Produktes eingesetzten Hilfsstoffs, der einer Fermentationsbrühe zugesetzt worden ist und aus dem mittels einer chemischen Reaktion in der Fermentationsbrühe eine andere Substanz entsteht, bekannt, wobei die folgenden Schritte durchlaufen werden: die Fermentationsbrühe wird einem ersten Verfahrensschritt unterzogen, in dem der in dem Fermentationsprozess eingesetzte Hilfsstoff, ein saurer Ionenaustauscher, eine Minerallauge oder Mineralsäure ist, ausgewählt aus der Gruppe bestehend aus Natronlauge, Ammoniak, Kalilauge, Salzsäure, Schwefelsäure, oder Phosphorsäure, und die entstehende andere Substanz ausgewählt ist aus der Gruppe bestehend aus Natrium-, Kalium,- Ammoniumchlorid, Natrium-, Kalium, Ammoniumphosphat, Natrium-, Kalium,- Ammoniumsulfat und/oder zumindest teilweise erschöpften sauren Ionenaustauschern mittels mindestens einem chromatographischen Verfahren in eine Fraktion A von dem mindestens einen in dem Fermentationsprozess anfallenden Produkt getrennt wird und letzteres in einer Fraktion B anfällt, die Fraktion A in einem zweiten Verfahrensschritt einer bipolaren Elektrodialyse unterworfen wird, um aus in der Fraktion A enthaltenen aus dem Hilfsstoff entstandene andere Substanz, wie Salzen, den Hilfsstoff, wie die zu den Salzen korrespondierenden Säuren/Laugen, zu generieren.

GEORGE Q. CHEN ET AL: "Removal of lactic acid from acid whey using electrodialysis",SEPARATION AND PURIFICATION TECHNOLOGY, Bd. 158, 1. Januar 2016 (2016-01-01), Seite 230-237 offenbart, dass entfettete Sauermolke ultra-filtriert (d.h. aufkonzentriert) wurde und anschließend sowohl die entfettete Sauermolke und die ulta-filtrierte entfettete Sauermolke in einem FD-ED-40 Modul elektrodialysiert wurde (2 Paar Kation- und Anionen-Austauschmembrane). Dabei assistiert die Ultra-filtration die Demineralisierung und die Nano-filtration reduziert die Chlorid-Konzentration. Durch die effektive Entfernung von Milchsäure-Ionen kann aus Sauermolke mittels Elektrodialyse 90% demineralisiertes Molkepulver (D90), einem wertvollen Inhaltsstoff für Säuglingsnahrung hergestellt werden.

### AUFGABE DER ERFINDUNG

Die Aufgabe der vorliegenden Erfindung hat daher darin bestanden, ein Verfahren bereitzustellen, mit dessen Hilfe man Sauermolke entsäuern kann, um auf diesem Wege Süßmolke zu erhalten.

Schließlich sollte das neue Verfahren es auch ermöglichen, Milchsäure in möglichst hoher Reinheit zu gewinnen.

### BESCHREIBUNG DER ERFINDUNG

Der Gegenstand der Erfindung betrifft Verfahren zur Gewinnung von Süßmolke aus Sauermolke, umfassend oder bestehend aus den folgenden Schritten:
(a) Bereitstellung von Sauermolke;
(b) Bereitstellen einer Spüllösung;
(c) Bereitstellung einer bipolaren Elektrodialyse-Vorrichtung, die mindestens drei nebeneinander angeordnete und über semipermeable Membranen verbundene Zellen verfügt;
(d) Aufgeben der Sauermolke auf die mittlere Zelle;
(e) Aufgeben der Spüllösung auf die beiden Zellen, die die mittlere Zelle flankieren;
(f) Bipolare Elektrodialyse der in der mittleren Zelle befindlichen Süßmolke unter Erhalt eines entsäuerten Diluats; und
(g) Anreichern der abgetrennten Milchsäure in der Spüllösung, die im im Kreis geführt wird, wobei die Spülllösung einer Umkehrosmose unterworfen und dabei ein wässriges Konzentrat von Milchsäure und Mineralien erhalten wird.

Überraschenderweise wurde gefunden, dass auf die oben beschriebene Weise Sauermolke in eine Süßmolke überführt werden kann, die sich gegenüber einem konventionellen Vergleichsprodukt auch noch dadurch auszeichnet, dass sie über eine verbesserte geschmackliche Qualität verfügt, nämlich mehr Süße aufweist und keinen mineralischen, metallischen Beigeschmack.

Die Erfindung wird durch die beiliegenden Ansprüche definiert.

### NANOFILTRATION

In einer bevorzugten Ausführungsform der Erfindung hat es sich als sinnvoll erwiesen, die Sauermolke mittels eines geeigneten Konzentrierungsverfahrens, vorzugsweise durch Nanofiltration aufzukonzentrieren. Auf diese Weise kann das Elektrodialysesystem kleiner gehalten werden und es werden schon 35 bis 50 Gew.-% der Mineralfracht in Permeat überführt, während man ein mineralarme Sauermolkenkonzentrat als Retentat erhält. Somit wird auch ein Elektrodialyseprodukt erhalten, das Milchsäure höherer Reinheit aufweist.

Die Nanofiltration stellt ein Filtrationsverfahren aus dem Bereich der Membrantechnik dar, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultra- und Nanofiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Die Nanofiltration bevorzugt Porendurchmesser im Bereich von 100 bis 5.000 und vorzugsweise 500 bis 2.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Nanofiltration kann im Sinne der vorliegenden Erfindung "heiß" oder "kalt", d.h. im Temperaturbereich von 8 bis 60 °C durchgeführt werden. Bevorzugt ist es jedoch, bei Temperaturen im niedrigen Bereich von 10 bis 20 °C zu arbeiten.

### BIPOLARE ELEKTRODIALYSE

Die bipolare Elektrodialyse stellt ein bekanntes Trennverfahren dar. Hierbei handelt es sich um einen elektrochemisch getriebenen Membranprozess, in dem Ionenaustauschermembranen in Kombination mit einer elektrischen Potentialdifferenz benutzt werden, um ionische Spezies von ungeladenen Lösungsmitteln oder Verunreinigungen abzutrennen.

Dazu wird in einem Elektrodialyse-Separator der Raum zwischen zwei Elektroden durch einen Stapel aus einander abwechselnden Anionen- und Kationenaustauschermembranen getrennt. Jedes Paar lonenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum Konzentrat vereint, während die salzarmen Lösungen das Diluat bilden.

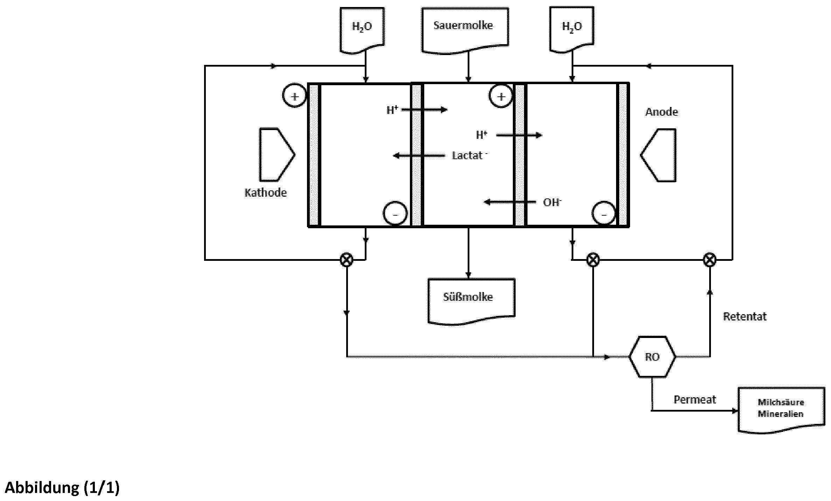

In einer bevorzugten Ausführungsform der vorliegenden Erfindung kommt eine bipolare Elektrodialysevorrichtung gemäß Abbildung 1 zum Einsatz. Diese besteht aus einer mittleren Zelle, die das Substrat - also die Sauermolke - enthält und die seitlich begrenzt wird von zwei weiteren Zellen, die die Spülflüssigkeit enthalten. Die bevorzugte Spülflüssigkeit ist dabei Wasser.

Die Zellen sind durch lonenaustauschermembranen voneinander getrennt. Nach Anlegen der Spannung laden sich die Trennmembranen unterschiedlich elektrisch auf. Aus der mittleren Zelle wandern Kationen (Protonen oder Alkaliionen) durch die negativ geladene Membran in die erste Zelle mit der Spülflüssigkeit, während aus dieser Zelle im Gegenzug Hydroxylionen in die mittlere Zelle diffundieren. Umgekehrt wandern aus der mittleren Zelle Anionen (hier Lactat) durch die positiv geladene Membran in die andere Zelle mit Spülflüssigkeit, aus der im Gegenzug Hydroxylionen in die mittlere Zelle diffundieren.

Auf diese Weise wird die Sauermolke nicht nur von ihrem Anteil an Milchsäure befreit, auch die Mineralien wandern in die Spülflüssigkeit, die im Kreis gefahren wird und sich dabei nach und nach mit Milchsäure und Mineralien anreichert, während aus der mittleren Zelle ein Diluat erhalten wird, das seiner Zusammensetzung nach einer mineralfreien bzw. mineralarmen Süßmolke entspricht.

Vorzugsweise wird das Verfahren dabei kontinuierlich durchgeführt.

### MILCHSÄURERÜCKGEWINNUNG

Grundsätzlich gilt, dass die Spüllösung kontinuierlich im Kreis geführt und beim Verlassen des Elektrodialyse-Systems vereint bzw. gemischt wird, um einen Ladungsausgleich sicher zu stellen. Weiterhin wird versucht, die Konzentration in der Spüllösung möglichst niedrig zu halten, damit die treibende Kraft nicht gegen eine hohe Ladungskonzentration in der Spüllösung arbeiten muss.

In einer weiterhin bevorzugten Ausführungsform wird das Verfahren unterbrochen, sobald die Spülflüssigkeit einen so hohen Gehalt an Milchsäure aufweist, so dass sich eine Rückgewinnung betriebswirtschaftlich loht; dieser Grenzgehalt kann daher variieren.

Zur Rückgewinnung kann dann entweder die gesamte Spülflüssigkeit oder aber auch nur ein Teil ausgeschleust werden, wobei die fehlende Menge dann durch Frischwasser ergänzt wird. Gegebenenfalls kann auch dieser Vorgang kontinuierlich durchgeführt werden, d.h. während Konzentrat ausgeschleust wird, wird gleichzeitig eine entsprechende Menge Frischwasser nachdosiert.

Die Aufarbeitung des Konzentrats kann zwar theoretisch auch mit Hilfe eines Eindampfers erfolgen, bevorzugt ist hier jedoch eine Umkehrosmose. Die Umkehrosmose oder Reversosmose ist ein physikalisches Membranverfahren zur Konzentrierung von in Flüssigkeiten gelösten Stoffen, bei der mit Druck der natürliche Osmose-Prozess umgekehrt wird.

Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 30 bar (Trinkwasserentsalzung) oder bis zu 8o bar (Meerwasserentsalzung).

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

Es wird dabei ein Milchsäurekonzentrat gewonnen, das außer einem geringen Teil an Mineralien keine Verunreinigungen enthält und beispielsweise für die Polymerisation besonders geeignet ist. Das Retentat kann wieder als Spülflüssigkeit in den Prozess rückgeführt werden.

### BEISPIELE

### BEISPIEL 1

Eine bipolare Elektrodialyseeinheit gemäß Abbildung 1 wurde kontinuierlich mit einem Durchsatz von 100 L/h Sauermolke (0,7 Gew.-% Milchsäure, 0,8 Gew.-% Mineralien, pH-Wert: 4,5) beschickt. Die beiden angrenzenden Zellen wurden mit Frischwasser im Kreislauf bei gleichem Durchsatz betrieben. Das Diluat wurde kontinuierlich abgenommen. Es wurde eine Süßmolke erhalten, die praktisch frei von Milchsäure und Mineralien war und einen pH-Wert von 5,9 aufwies.

Nach einer Betriebsdauer von 10 Stunden hatte die Milchsäurekonzentration im Spülwasser einen Wert von 1,8 Gew.-% erreicht. Die Spülwasserfraktionen aus beiden Zellen wurde kontinuierlich abgelassen und gleichzeitig gegen eine gleiche Menge Frischwasser ersetzt. Die beiden Spülwassermengen wurden vereinigt und bei 20 °C auf eine Umkehrosmoseeinheit (Konzentrierungsfaktor 10) gegeben. Das Permeat wurde in den Spülmittelkreislauf der Dialyseeinheit zurückgeführt, das Retentat entwässert und ein kristallines produkt erhalten, welches zu 85,1 Gew.-% aus Milchsäure und 14,9.-% mineralischen Salzen, vorwiegend Natriumchlorid bestand.

### BEISPIEL 2

### Geschmackliche Beurteilung

Die erfindungsgemäß erhaltene Süßmolke wurde gegen eine konventionelle Süßmolke aus der Lab-Käseproduktion von einem Panel bestehend aus 5 erfahrenen Testern verkostet und auf einer Skala von (1) = gering vorhanden bis (5) = deutlich ausgeprägt bewertet. Die Ergebnisse finden sich in Tabelle 1:

**Tabelle 1**

| Verkostung von Süßmolke | | |
|---|---|---|
| | **Erfindungsgemäße Süßmolke** | **Standard-Süßmolke** |
| Süße | 4,5 | 3,0 |
| Mineralischer Beigeschmack | 2,0 | 3,5 |

Die erfindungsgemäße Süßmolke zeichnet sich durch höhere Süße und geringeren mineralischen Beigeschmack aus.

## Patentansprüche

1. Verfahren zur Gewinnung von Süßmolke aus Sauermolke, umfassend oder bestehend aus den folgenden Schritten:
(a) Bereitstellung von Sauermolke;
(b) Bereitstellen einer Spüllösung;
(c) Bereitstellung einer bipolaren Elektrodialyse-Vorrichtung, die mindestens drei nebeneinander angeordnete und über semipermeable Membranen verbundene Zellen verfügt;
(d) Aufgeben der Sauermolke auf die mittlere Zelle;
(e) Aufgeben der Spüllösung auf die beiden Zellen, die die mittlere Zelle flankieren;
(f) Bipolare Elektrodialyse der in der mittleren Zelle befindlichen Süßmolke unter Erhalt eines entsäuerten Diluats; und
(g) Anreichern der abgetrennten Milchsäure in der Spüllösung, die im Kreis geführt wird,
wobei die Spüllösung einer Umkehrosmose unterworfen wird und dabei ein wässriges Konzentrat von Milchsäure und Mineralien erhalten wird.

2. Verfahren nach Anspruch 1, **dadurch gekennzeichnet, dass** man als Spüllösung Wasser einsetzt.

3. Verfahren nach den Ansprüchen 1 und/oder 2, **dadurch gekennzeichnet, dass** man die Sauermolke vor der Elektrodialyse aufkonzentriert.

4. Verfahren nach Anspruch 3, **dadurch gekennzeichnet, dass** man die Sauermolke durch Nanofiltration aufkonzentriert.

5. Verfahren nach Anspruch 4, **dadurch gekennzeichnet, dass** man die Nanofiltration mit Membranen durchführt, die einen Porendurchmesser im Bereich von 100 bis 5.000 Dalton aufweisen.

6. Verfahren nach den Ansprüchen 4 und/oder 5, **dadurch gekennzeichnet, dass** man die Nanofiltration im Temperaturbereich von 8 bis 60 °C durchführt.

7. Verfahren nach mindestens einem der Ansprüche 4 bis 6, **dadurch gekennzeichnet, dass** man ein mineralarmes Sauermolke-Konzentrat als Retentat und ein Permeat herstellt, welches 35 bis 50 Gew.-% der Mineralfracht - bezogen auf die Ausgangs-Sauermolke - enthält.

8. Verfahren nach mindestens einem der Ansprüche 1 bis 7, **dadurch gekennzeichnet, dass** man es kontinuierlich durchführt.

## Claims

1. A process for the obtainment of sweet whey from acid whey comprising or consisting of the following steps:
(a) providing acid whey;
(b) providing a rinsing solution;
(c) providing a bipolar electrodialysis device having at least three cells arranged side by side and connected by semi-permeable membranes;
(d) applying the acid whey to the central cell;
(e) applying the rinsing solution to the two cells flanking the central cell;
(f) bipolar electrodialysis of the sweet whey in the middle cell to obtain a deacidified diluate; and
(g) enriching the separated lactic acid in the rinsing solution which is circulated,
wherein the rinse solution is subjected to reverse osmosis to obtain an aqueous concentrate of lactic acid and minerals.

2. The process according to claim 1, **characterised in that** water is used as the rinsing solution.

3. The process according to claims 1 and/or 2, **characterised in that** the acid whey is concentrated before electrodialysis.

4. The process according to claim 3, **characterised in that** the acid whey is concentrated by nanofiltration.

5. The process according to claim 4, **characterized in that** the nanofiltration is carried out with membranes having a pore diameter in the range of 100 to 5,000 Daltons.

6. The process according to claims 4 and/or 5, **characterized in that** the nanofiltration is carried out in the temperature range from about 8 to about 60 °C.

7. The process according to at least one of claims 4 to 6, **characterized in that** a low-mineral acid whey concentrate as retentate and a permeate are prepared, wherein the permeate contains 35 to 50% by weight of the mineral load, based on the starting acid whey.

8. The process according to at least one of claims 1 to 7, **characterised in that** it is carried out continuously.

## Revendications

1. Procédé d'obtention de lactosérum doux à partir de petit-lait acide, comprenant ou constitué des étapes suivantes :
(a) mise à disposition de petit-lait acide ;
(b) mise à disposition d'une solution de rinçage ;
(c) mise à disposition d'un dispositif d'électrodialyse bipolaire qui est pourvu d'au moins trois cellules agencées les unes à côté des autres et reliées par des membranes semiperméables;
(d) chargement du petit-lait acide sur la cellule du milieu ;
(e) chargement de la solution de rinçage sur les deux cellules qui encadrent la cellule du milieu ;
(f) électrodialyse bipolaire du lactosérum doux se trouvant dans la cellule du milieu avec obtention d'un diluat désacidifié ; et
(g) enrichissement de l'acide lactique séparé dans la solution de rinçage, qui est mise en circulation,
la solution de rinçage étant soumise à une osmose inverse et un concentré aqueux d'acide lactique et de minéraux étant ainsi obtenu.

2. Procédé selon la revendication 1, **caractérisé en ce qu'**on utilise de l'eau en tant que solution de rinçage.

3. Procédé selon les revendications 1 et/ou 2, **caractérisé en ce qu'**on concentre le petit-lait acide avant l'électrodialyse.

4. Procédé selon la revendication 3, **caractérisé en ce qu'**on concentre le petit-lait acide par nanofiltration.

5. Procédé selon la revendication 4, **caractérisé en ce qu'**on met en oeuvre la nanofiltration avec des membranes qui présentent un diamètre de pores dans la plage de 100 à 5 000 Daltons.

6. Procédé selon les revendications 4 et/ou 5, **caractérisé en ce qu'**on met en oeuvre la nanofiltration dans une plage de température de 8 à 60 °C.

7. Procédé selon au moins l'une des revendications 4 à 6, **caractérisé en ce qu'**on prépare un concentré de petit-lait acide pauvre en minéraux comme rétentat, et un perméat qui contient 35 à 50 % en poids de la charge minérale - par rapport au petit-lait acide de départ.

8. Procédé selon au moins l'une des revendications 1 à 7, **caractérisé en ce qu'**on le met en oeuvre de manière continue.
